# EUROPEAN PATENT SPECIFICATION

(11) **EP 3 677 713 B1**
(45) Date of publication and mention of the grant of the patent: **30.08.2023**
(21) Application number: 19218868.8
(22) Date of filing: 20.12.2019
(51) Int. Cl.: D04B 37/02, G06F 30/20, G06F 113/12

(54) **KNITTED FABRIC DESIGN SYSTEM**
MASCHENWARENENTWURFSSYSTEM
SYSTÈME DE CONCEPTION D'UN TRICOT

(30) Priority: 27.12.2018 JP 2018244062
(43) Date of publication of application: 08.07.2020
(73) Proprietor: SHIMA SEIKI MFG., LTD., Wakayama 641-8511 (JP)
(72) Inventor: SAKAI, Yoshiyuki, Wakayama, 641-8511 (JP); YASUDA, Kazuki, Wakayama, 641-8511 (JP); MINAMI, Masayuki, Wakayama, 641-8511 (JP)
(74) Representative: Schmidbauer, Andreas Konrad

(56) References cited:
- EP-A1- 2 015 205
- US-B1- 6 611 730
- Jared B Counts: "Knitting with Directed Graphs", Master of Engineering in Electrical Engineering and Computer Science , 1 June 2018 (2018-06-01), pages 51-68, XP055691753, Massachusetts Institute of Technology Retrieved from the Internet: URL:https://dspace.mit.edu/bitstream/handl e/1721.1/119547/1076272960-MIT.pdf?sequenc e=1&isAllowed=y [retrieved on 2020-05-05]
- JAMES MCCANN ET AL: "A compiler for 3D machine knitting", ACM TRANSACTIONS ON GRAPHICS, ACM, NY, US, vol. 35, no. 4, 11 July 2016 (2016-07-11), pages 1-11, XP058275825, ISSN: 0730-0301, DOI: 10.1145/2897824.2925940
- VIDYA NARAYANAN ET AL: "Automatic Machine Knitting of 3D Meshes", ACM TRANSACTIONS ON GRAPHICS, vol. 37, no. 3, 9 August 2018 (2018-08-09) , pages 1-15, XP055691755, US ISSN: 0730-0301, DOI: 10.1145/3186265

## Description

### Technical Field

The present invention relates to a knitted fabric design system for designing a knitted fabric to be knitted with a flat knitting machine.

### Background Art

Conventionally, knitted fabric design systems for designing a knitted fabric on a monitor have been proposed (see the knit paint system disclosed in Patent Literature 1, for example). With such a knitted fabric design system, a user assigns knitting codes to a design sheet displayed on the monitor to design a knitted fabric. The design sheet is grid-shaped such that a plurality of knitting courses, each including a plurality of knitting units lined up in a lateral direction, are lined up in a vertical direction, the plurality of knitting units corresponding to the respective needles of the needle beds of a flat knitting machine. The knitted fabric design system generates, based on the design sheet to which the knitting codes are assigned, design data that includes information relating to positions, on the design sheet, of the knitting units and the knitting codes assigned to the positions. The knitted fabric design system further generates, based on the design data, knitting data according to which the flat knitting machine performs knitting.

As a function for helping a user design a knitted fabric when using the knitted fabric design system, the knitting assist disclosed in Patent Literature 2 for example, the loop simulation disclosed in Patent Literature 3 for example, and the like have been proposed. The knitting assist notifies the user of the likelihood of, when knitting is performed based on design data, knitting being discontinued due to yarn breakage or the like. Examples of the timing at which the notification is performed include a timing at which, for example, the number of transfer performed with respect to a single stitch, the distance between adjacent stitches, and the like in the design data exceed respective acceptable values. On the other hand, the loop simulation displays, on the monitor, a simulation image of a knitted fabric to be knitted based on the design data.

### Citation List

### Patent Literatures

Patent Literature 1: JP H07-119004A
Patent Literature 2: WO 2009/034910A
Patent Literature 3: JP 2005-120501A

Prior art document EP 2 015 205 A1 discloses a knitting structure model generating device which generates a knitting structure model from knitting structure data represented by specific symbols so that an individual can easily imagine what type of knit fabric will be knitted. A knitting structure data aquiring portion acquires knitting structure data made up of symbols representing a tuck, representing a welt, and representing a knit. A node aligning portion aligns nodes representing connecting points of yarns forming the knit fabric within the XY plane in a lattice form. A model generating portion generates a simplified knitting structure model by connecting the nodes aligned within the XY plane with edges corresponding to the yarns according to the knitting structure data.

From US 6 611 730 B1 a device is known for designing knit products to be manufactured on a knitting machine. The device includes at least one storage device for storing data required for the production of the knit products on the knitting machine; at least one display device for displaying design images for the knit products; and at least one input device for altering the design images. Data to be exchanged between the storage, input and display devices is processed to generate at least one knit image presentation and at least one corresponding thread course presentation for display as the design images on the display device, and one of the presentations is simultaneously correspondingly altered as the other is being altered by using the input device.

Prior art document Jared B Counts, "Knitting with Directed Graphs", Massachusetts Institute of Technology, June 1, 2018, page 51 to 68 discloses a machine knitting graph with the concept of drawing lines of the connection state between stitches in the wale direction. Lines of the stitches being temporary held on a needle of a back needle are drawn.

### Summary of Invention

### Technical Problem

In the conventional knitted fabric design systems, it is difficult for a user to grasp an overall picture of a knitted fabric in the course of the knitting process. For example, even if design data is used for which the knitting assist has determined that there are no problems in continuing knitting, the pattern may be disordered when the user checks the finished knitted fabric using the loop simulation. However, since it is conventionally difficult for a user to grasp an overall picture of the knitted fabric in the course of the knitting process, it is also difficult to specify which portion of the knitting process is problematic and is causing the disorder of the pattern.

The present invention was made in view of the aforementioned circumstances, and it is an object thereof to provide a knitted fabric design system in which it is easy to grasp an overall picture, on design data, of a knitted fabric in the course of a knitting process.

### Solution to Problem

A knitted fabric design system according to an aspect of the present invention includes:
a display unit configured to display a design sheet that is grid-shaped such that a plurality of knitting courses, each including a plurality of knitting units lined up in a lateral direction, are lined up in a vertical direction, the knitting units corresponding to respective needles of needle beds of a flat knitting machine;
an input unit with which a user can input knitting codes to the knitting units of the design sheet; and
a design data generating unit configured to generate, based on the design sheet to which the knitting codes are assigned, design data that includes information relating to positions, on the design sheet, of the knitting units and the knitting codes assigned to the positions,
wherein the knitted fabric design system further includes:
   a data extracting unit configured to extract, based on the design data, movement information relating to a movement path corresponding to the position of a needle, on which a stitch is temporarily held and an ultimate destination, being the position of a needle on which the stitch is held after the knitting operation defined by the corresponding knitting code has been executed, on the needle beds, of stitches corresponding to the knitting units;
   a derivation unit configured to obtain, based on the movement information, connection information relating to a connection state of stitches that are successive in a wale direction from a starting stitch to a termination stitch on the design data; and
   a display adjustment unit configured to cause the display unit to display, based on the connection information, the connection state drawn with a line so that the connection state is superimposed on the design sheet.

As an aspect of the knitted fabric design system of the present invention, the display adjustment unit may be configured to perform display such that a starting stitch and a termination stitch are connected in the wale direction with a straight line on the design data.

As an aspect of the knitted fabric design system of the present invention, the display adjustment unit may be configured to display a route of movement, in a knitting width direction, of stitches that are connected in the wale direction from a starting stitch to a termination stitch on the design data, thereby displaying not only connection information relating to ultimate stitch destinations but also information relating to movement paths of stitches on the way to the ultimate destinations.

As an aspect of the knitted fabric design system of the present invention, if the design data is partial design data for knitting a part of a knitted fabric, the derivation unit may obtain the connection information on the assumption that, before a starting end of the partial design data, virtual stitches are present over a range larger than the knitting width of the partial design data, and may delete, from the connection information, a virtual stitch for which no knitting code is set after a predetermined number of knitting courses or more.

### Advantageous Effects of Invention

According to the knitted fabric design system of the present invention, a connection state of stitches in a wale direction on the design data is displayed on the design sheet, and thus a user can visually check the connection state. By viewing connection of stitches in the wale direction, the user can easily grasp an overall picture in the course of the knitting process. Accordingly, it is easy to recognize a problematic portion of the knitting process based on the design data.

By connecting a starting stitch and a termination stitch in the wale direction with a straight line, it is easy to recognize the ultimate destination that the stitches that are successive from the starting stitch in the wale direction will reach. Accordingly, it is easy to recognize the state of rotation of the stitches, for example. This also creates the advantage that a stitch that is not involved in knitting and is isolated, or the like can be easily found.

By displaying, on the display unit, a route of movement of stitches in the knitting width direction, it is possible to correctly recognize which position of the knitted fabric a stitch is to be moved to in the knitting width direction. As a result, it is easy to recognize a position at which specific knitting is performed, such as a position at which the distance between adjacent stitches is large. If a position at which the distance between adjacent stitches is large can be specified, design data can be corrected so that no yarn breakage occurs. In contrast, based on a result of loop simulation, it is not possible to recognize that the distance between adjacent stitches during the knitting is large.

By setting virtual stitches for partial design data for knitting a part of a knitted fabric, it is possible to grasp an overall picture of the partial design data in the course of the knitting process. Examples of the partial design data include an extract of existing design data for knitting a knitted fabric that corresponds to formation of a structure pattern.

### Brief Description of Drawings

FIG. 1 is a functional block diagram illustrating a knitted fabric design system according to Embodiment 1.
FIG. 2 is a diagram illustrating a display example of a design sheet in which connection states of stitches in a wale direction are drawn with straight lines.
FIG. 3 is a diagram illustrating a display example of the design sheet in which routes of movement of stitches that are connected in the wale direction are drawn.
FIG. 4 is a diagram illustrating drawing routes of connection states of stitches when a four-bed flat knitting machine is used.
FIG. 5 is a diagram illustrating a display example of the design sheet in which routes of movement of stitches that are connected in the wale direction are drawn, according to Embodiment 2.
FIG. 6 is a diagram illustrating a display example of the design sheet that is different from that of FIG. 5.
FIGS. 7(A) and 7(B) illustrate a procedure for drawing stitch connection states based on partial design data, according to Embodiment 3.

### Description of Embodiment

Hereinafter, exemplary embodiments of a knitted fabric design system according to the present invention will be described with reference to the drawings.

### Embodiment 1

### Overall Configuration

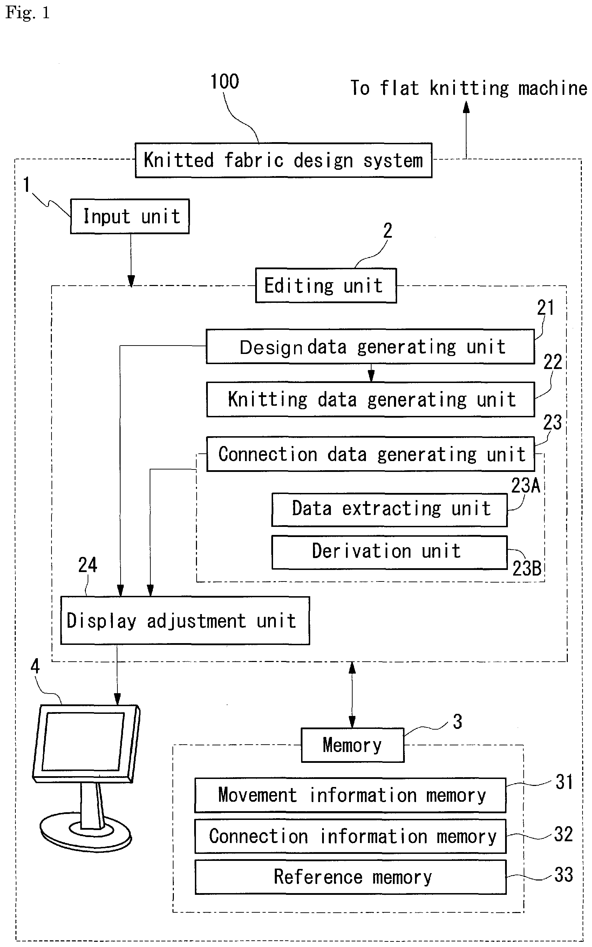

A knitted fabric design system 100 shown in the functional block diagram of FIG. 1 is provided with an input unit 1, an editing unit 2, a memory 3, and a display unit 4. The knitted fabric design system 100 helps a user design a knitted fabric on the display unit 4, and generates knitting data according to which a flat knitting machine knits the designed knitted fabric. The knitted fabric design system 100 is applicable to designing knitted fabrics to be knitted using any flat knitting machine such as a two-bed flat knitting machine or a four-bed flat knitting machine. The knitted fabric design system 100 has a feature of displaying, on the display unit 4, a connection state of stitches in a wale direction of a designed knitted fabric so that a user can visually check the connection state. The following will describe the constituent components of the knitted fabric design system 100 in detail.

### Input Unit

The input unit 1 is used by the user to edit design data, and has the form of a keyboard, a mouse, a scanner, a digitizer, or the like. In the present example, the input unit 1 is used to input knitting codes to a design sheet displayed on the display unit 4.

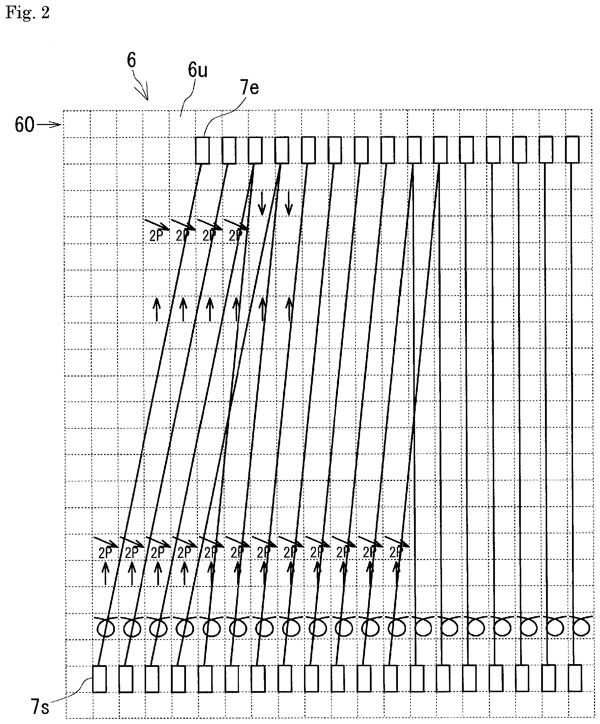

Note here that the design sheet displayed on the display unit 4 has frames in a grid shape such that a plurality of knitting courses, each including a plurality of knitting units lined up in a lateral direction, are lined up in a vertical direction, the plurality of knitting units corresponding to the respective needles of the needle beds of the flat knitting machine. A knitting unit is a cell of the frames in a grid shape (design sheet 6) indicated by dotted lines shown in FIG. 2, and serves as a unit to which one knitting code is assigned. The lateral direction of this design sheet corresponds to the length direction of the needle beds (direction in which the plurality of needles arranged in parallel to each other). On the other hand, the vertical direction of the design sheet corresponds to a time axis that indicates the time when the knitting is performed. The vertical direction may be considered as substantially corresponding to the wale direction of a knitted fabric.

The design sheet may also have an additional sheet in which a stitch value, a racking pitch of the needle beds, and the like are set. "Stitch value" refers to an amount by which a needle is lowered when a stitch is formed, and when the stitch value is changed, the size of the stitch will be changed. "Racking pitch" refers to an amount of relative movement of a back needle bed of the flat knitting machine with respect to a front needle bed in the longitudinal direction. Racking of the needle beds is used when, for example, a stitch is moved in a knitting width direction.

The knitting code that is input to each knitting unit is an icon expressed so as to be able to visually distinguish a knitting operation that the flat knitting machine is to perform. The knitting code is expressed by, for example, a color, a numeric character, a figure, or a combination thereof. The knitting operation associated with a knitting code is predetermined. For example, a knitting code expressed in red is defined as a knitting code that makes the flat knitting machine form a front stitch, and a knitting code expressed in green is defined as a knitting code that makes the flat knitting machine form a back stitch. Of course, one knitting code may also define a plurality of knitting operations. Examples thereof include a knitting code that defines knitting a front stitch, and then moving the front stitch to the opposite needle bed. The knitting codes are stored in a later-described reference memory 33 of the memory 3.

### Editing Unit

The editing unit 2 has a function of generating various types of data regarding design of a knitted fabric, and can be constituted by, for example, a computer. This editing unit 2 includes a design data generating unit 21, a knitting data generating unit 22, a connection data generating unit 23, and a display adjustment unit 24.

### Design Data Generating Unit

The design data generating unit 21 generates, based on the design sheet, design data that includes information relating to positions of knitting units on the design sheet, and the knitting codes assigned to the positions. In other words, design data is an aggregate of a plurality of knitting codes, and is data in which the order of execution of the knitting codes is defined. The design data generating unit 21 can also generate, based on existing design data read out from a USB memory or the like, a new design sheet in which knitting codes are arranged at several positions.

### Knitting Data Generating Unit

The knitting data generating unit 22 generates, based on the design data, knitting data according to which the flat knitting machine performs knitting. The knitting data is a program in which actual needle operations, actual carriage movements, and an actual procedure of feeding knitting yarn, and the like are set. The knitting data is transmitted to the flat knitting machine via a recording medium such as a USB memory, in a wired manner, or in a wireless manner, for example. The knitting data may also be used to generate a simulation image of the knitted fabric.

### Connection Data Generating Unit

The connection data generating unit 23 includes a data extracting unit 23A and a derivation unit 23B, and is configured to obtain, based on the design data, a connection state of stitches that are successive in the wale direction. The data extracting unit 23A extracts, based on the design data, information relating to a movement path, on the needle beds, of stitches of the knitting units and to an ultimate stitch destination. "Ultimate stitch destination" refers to the position of a needle on which the stitch is held after the knitting operation defined by the corresponding knitting code has been executed. "Information relating to a movement path" includes the position of a needle on which a stitch is temporarily held. For example, if, for a knitting unit, a knitting code is set that defines moving a stitch held on a needle A of a front needle bed to a needle C, which is located to the right of the needle A by two needles, of the front needle bed, the stitch will be temporarily held on a needle of a back needle bed, and then the back needle bed is racked, and the stitch is moved to the needle C of the front needle bed. The data extracting unit 23A extracts information indicating that the stitch has moved via the needle of the back needle bed (information relating to a movement path) and information indicating that the stitch is held on the needle C of the front needle bed (information relating to an ultimate destination), and stores the extracted pieces of information in a movement information memory 31 of the memory 3. The data extracting unit 23A extracts the movement information for all of the knitting units.

Note here that the movement information includes information indicating that the stitch will not move. If, for example, a knitting code that defines forming a front stitch on an existing stitch held on the needle A of the front needle bed is set, a front stitch will be held on the needle A of the front needle bed. In this case, the ultimate stitch destination is the same needle as the needle on which the stitch was held before the knitting code was executed.

The derivation unit 23B acquires, based on the information relating to an ultimate stitch destination out of the movement information stored in the movement information memory 31, connection information relating to the connection state of stitches that are successive in the wale direction from the starting end to the termination on the design data. If, for example, a new first stitch contiguous with the starting stitch in the wale direction is formed, the derivation unit 23B will generate information indicating that the starting stitch and the new first stitch are contiguous with each other in the wale direction. Furthermore, the derivation unit 23B traces the new first stitch to its destination based on the movement information, and if a new second stitch contiguous with this new first stitch in the wale direction is formed, the derivation unit 23B will generate information indicating that the starting stitch, the new first stitch, and the new second stitch are contiguous with each other in the wale direction. The derivation unit 23B repeats this operation until the termination stitch, generates connection information relating to the connection state of stitches that are successive from the starting stitch to the termination stitch in the wale direction, and stores the generated information in a connection information memory 32. This derivation unit 23B performs the same operation on each of the starting stitches of the design data, and generates connection information relating to the connection state of the stitches that are successive from the starting stitch in the wale direction.

### Display Adjustment Unit

The display adjustment unit 24 causes the display unit 4 to display the design sheet that corresponds to the design data constructed in the editing unit 2. Furthermore, the display adjustment unit 24 expresses connection states of stitches in the wale direction as drawn lines based on the connection information stored in the connection information memory 32, and causes the display unit 4 to display the connection states drawn with lines so that they are superimposed on the design sheet. Examples of the line drawing include straight lines connected to each other, and symbols such as arrows lined up in a linear fashion. Furthermore, line drawing that belongs to the front needle bed and line drawing that belongs to the back needle bed may have different colors. Specific drawing modes of a connection state include the two following modes.

### First Drawing Mode

The first drawing mode will be described with reference to FIG. 2. FIG. 2 shows part of the design sheet 6. In FIG. 2, the cells of the design sheet 6 are indicated by dotted lines. Each knitting unit 6u is a dotted square frame, and the design sheet 6 is designed such that a plurality of knitting courses 60, each including the knitting units 6u lined up in the lateral direction, are lined up in the vertical direction. A loop shape input to a knitting unit 6u is a knitting code that defines forming a front stitch. An upward arrow is a knitting code that defines moving a stitch from the front needle bed to the back needle bed. An obliquely downward arrow with "2P" is a knitting code that defines moving the back needle bed by two pitches, and moving a stitch from the back needle bed to the front needle bed. FIG. 2 shows only knitting codes set for the front knitted fabric portion of a tubular knitted fabric, and does not show knitting codes set for the back knitted fabric portion. In other words, the knitting course 60 in which no knitting codes are arranged can be regarded as having knitting codes set for the back needle bed.

In FIG. 2, starting stitches 7s and termination stitches 7e on the design data are each indicated with a rectangle, and a starting stitch 7s and a termination stitch 7e are connected by a straight line. According to the drawing mode, it is easy to recognize the ultimate positions that the stitches to be knitted successively from the starting stitch 7s in the wale direction will reach. Accordingly, it is easy to find an error in knitting on the design data. For example, even if the left-most knitting code of the seventh course from the bottom in FIG. 2 is mistakenly not set, it is possible to easily recognize that there is an error in a setting of a knitting code, because the line drawn directly upward from the left-most starting stitch 7s is displayed.

Here, if the connection states of the back knitted fabric portion are also shown in FIG. 2, it is preferable that starting stitches and termination stitches of the back knitted fabric portion be arranged to the right of the starting stitches 7s and the termination stitches 7e, and the connection states of the back knitted fabric portion be drawn by lines.

### Second Drawing Mode

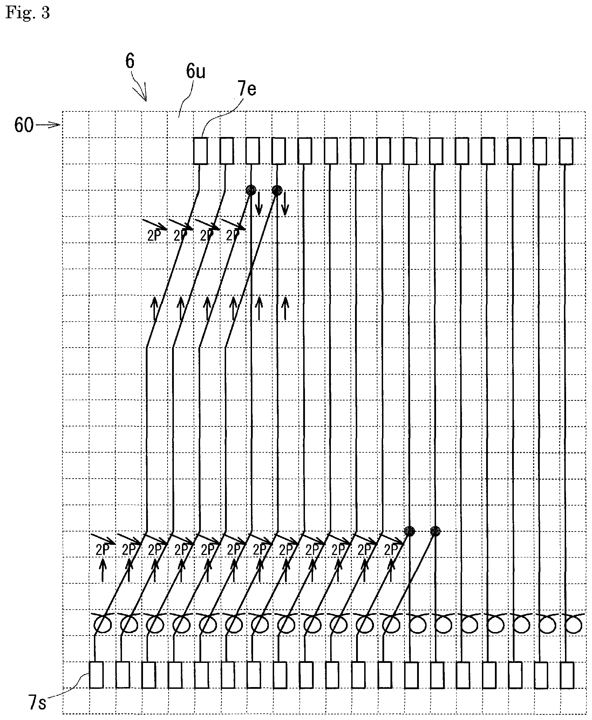

The second drawing mode will be described with reference to FIG. 3. The design sheet 6 shown in FIG. 3 is the same as that of FIG. 2. In FIG. 3, on the design data, routes of movement, in the knitting width direction, of stitches that are successive in the wale direction from the starting stitch 7s to the termination stitch 7e are shown. In FIG. 3, a position at which stitches overlap each other is indicated by a black circle. According to this drawing mode, it is possible to easily recognize a knitting portion in which yarn breakage may occur, such as a portion in which the distance between adjacent stitches is large, or a double stitch is moved.

### Memory

The memory 3 includes the movement information memory 31 in which movement information is stored, the connection information memory 32 in which connection information is stored, and the reference memory 33 in which knitting codes are stored. In the present example, part of the memory 3 constitutes the memories 31 to 33. The memory 3 can, of course, store other types of information relating to design of a knitted fabric.

### Display Unit

The display unit 4 is used for a user to visually recognize information relating to design of a knitted fabric. Examples of information to be displayed include the above-described design sheet and the like. For example, a liquid crystal display or the like may be used as the display unit 4. If a touch panel is used as the display unit 4, the display unit 4 can serve as part of the input unit 1.

### Effects

According to the above-described knitted fabric design system 100, it is possible to visually recognize connection of stitches of a knitted fabric in the wale direction, as shown in FIGS. 2 and 3. Therefore, it is possible to easily grasp an overall picture of the knitted fabric in the course of the knitting process, and it is also possible to easily find a problematic portion of the knitting process based on design data.

### Embodiment 2

Embodiment 1 has described an example in which information relating to ultimate stitch destinations is used to draw connection states of stitches in the wale direction. In contrast thereto, Embodiment 2 will describe an example in which connection states are drawn taking into consideration not only information relating to ultimate stitch destinations but also information relating to movement paths of stitches on the way to the ultimate destinations.

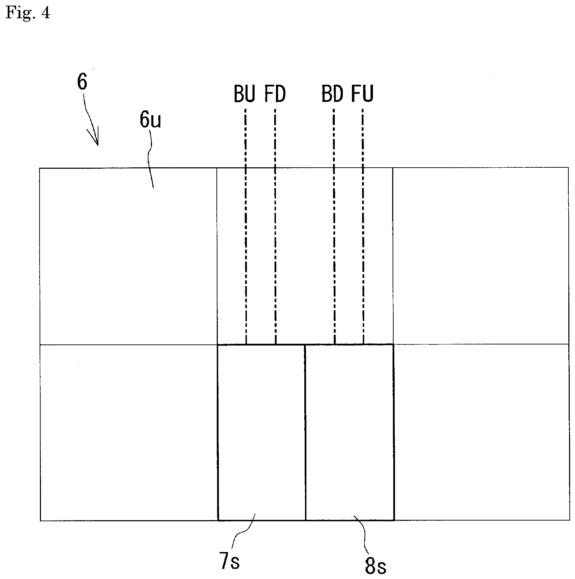

FIG. 4 is an enlarged view of knitting units 6u of the design sheet 6. FIG. 4 shows a starting stitch 7s of the front knitted fabric portion and a starting stitch 8s of the back knitted fabric portion. Two-dot chain lines extending from the starting stitches 7s and 8s each indicate a drawing route for drawing a connection state that corresponds to the needle bed on which stitches are held. The shown example depicts the drawing routes of a four-bed flat knitting machine, which includes a lower front needle bed FD, a lower back needle bed BD, an upper front needle bed FU, and an upper back needle bed BU. For example, while a stitch is held on the lower front needle bed FD, the straight line of the connection state is drawn along the second drawing route from the left of the drawing that is indicated by the two-dot chain line.

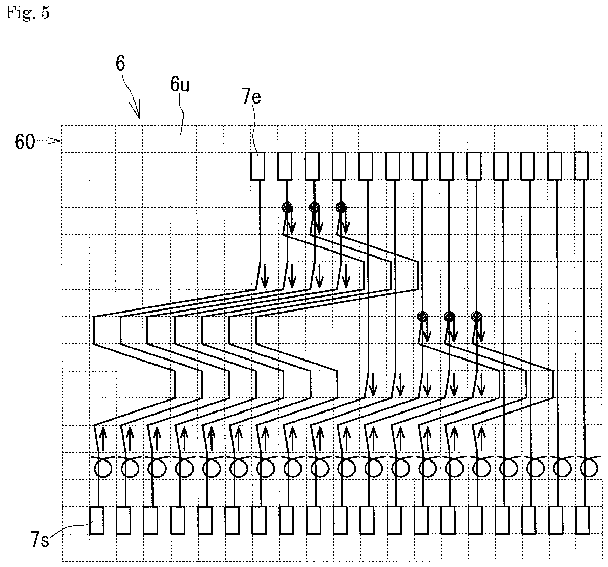

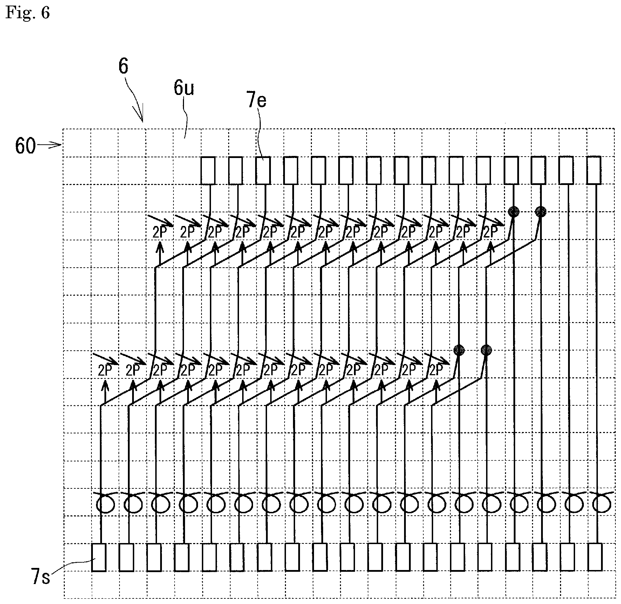

Note here that, with a typical four-bed flat knitting machine, a stitch held on the lower front needle bed FD can be moved to the lower back needle bed BD or the upper back needle bed BU, but not to the upper front needle bed FU. A stitch held on the lower back needle bed BD can be moved to the lower front needle bed FD or the upper front needle bed FU, but not to the upper back needle bed BU. Furthermore, no stitch can be moved between the upper front needle bed FU and the upper back needle bed BU. In the light of such a mechanism, when, as shown in FIG. 4, the drawing routes of the upper back needle bed BU, the lower front needle bed FD, the lower back needle bed BD, and the upper front needle bed FU are arranged in this order from the starting stitch 7s to the starting stitch 8s, the straight lines of the connection states can be viewed very easily. An example in which connection states are drawn according to the drawing routes of FIG. 4 will be described with reference to FIGS. 5 and 6.

FIG. 5 shows an example in which a racking pitch for the back needle beds is designated in a not-shown additional sheet. Taking the connection state of stitches that are successive from the left-most starting stitch 7s of FIG. 5 as an example, a knitting code that defines forming a front stitch is set for the second upper knitting unit from the starting stitch 7s that is held on the lower front needle bed FD, and then a knitting code that defines moving the stitch to the upper back needle bed BU is set for the next upper knitting unit. Accordingly, the straight line that extends from the starting stitch 7s and indicates the connection state is bent to the left and is shifted to the drawing route of the upper back needle bed BU. For the sixth, eighth, and tenth knitting courses 60 from the bottom, knitting codes that define racking of the back needle bed are set on the additional sheet, and the straight lines that indicate the connection states are bent to the left and the right. In the eleventh knitting course 60 from the bottom, a knitting code that defines moving the stitch from the upper back needle bed BU to the lower front needle bed FD is set, and thus the straight line that indicates the connection state is shifted to the drawing route of the lower front needle bed FD, and is connected to the termination stitch 7e. With respect to the other starting stitches 7s, stitch connection states are drawn so that a user can recognize on which needle bed stitches are held in the knitting process. When viewing the portion in the vicinity of the center of FIG. 5, it is clear that the distance between adjacent stitches is large. The larger the distance between stitches, the more likely that problems such as yarn breakage will occur. By drawing, in this way, the stitch connection state together with the course of movement of stitches, it is possible to easily specify the position at which problems such as yarn breakage may occur. If connection states are drawn only by connecting stitches to ultimate destinations, it is difficult to recognize the state in which the distance between adjacent stitches is large.

Furthermore, in an example shown in FIG. 6, the ninth knitting course 60 from the bottom includes double stitches (each indicated by a black circle) formed on the stitches that are successive, in the wale direction, from the fifth and sixth starting stitches 7s from the left. These double stitches are moved to the upper back needle bed BU in the thirteenth knitting course 60 from the bottom and then moved to the lower front needle bed FD in the fourteenth knitting course 60 from the bottom, resulting in triple stitches. If a double stitch is moved, there is the risk that it cannot appropriately be transferred. By drawing, in this way, the stitch connection states together with the course of movement of stitches, it is possible to easily specify the position at which problems such as yarn breakage may occur.

### Embodiment 3

There is also a demand for grasping an overall picture of partial design data, serving as design data, for knitting a part of a knitted fabric in the course of the knitting process. Examples of the partial design data include an extract of existing design data, and package data. Package data is design data that is stored in advance in the design system and is used to knit a part of a knitted fabric. Examples thereof include package data for performing bind-off at the end of knitting, and package data for knitting a specific structure pattern.

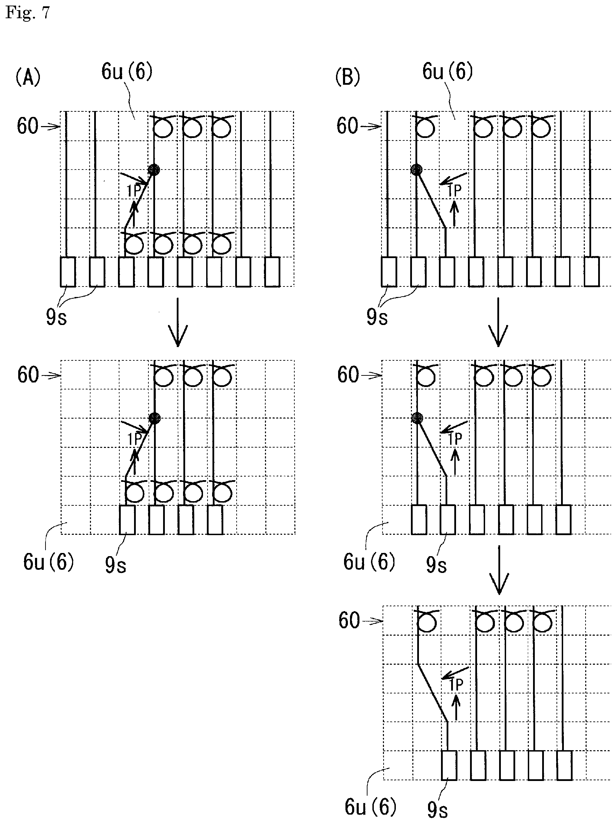

Note here that, because partial design data does not include information relating to a knitting course to be knitted before the partial design data is knitted, and it is not clear what state the starting stitch of the partial design data is in, it is not possible to generate connection information. Accordingly, the derivation unit 23B shown in FIG. 1 obtains connection information of the partial design data on the assumption that, before the starting end of the partial design data, virtual stitches are present over a range larger than the knitting width of the partial design data. The range in which the virtual stitches are set is a range that is larger than the knitting width of the partial design data by one or more stitches to both of the right and left sides. The range in which the virtual stitches are set may also cover the entire width of a knitting course (that is, all of the needles of the needle beds). Furthermore, the derivation unit 23B deletes a virtual stitch for which no knitting code is set after a predetermined number of knitting courses. Specific processing examples will be described with reference to FIGS. 7(A) and (B).

A design sheet 6 shown in FIG. 7(A) is obtained from partial design data that is extracted from existing design data. The second upper course and onward of the design sheet 6 correspond to the partial design data. On this design sheet 6, the second knitting course 60 from the bottom includes four knitting codes that define forming a front stitch, the third knitting course 60 from the bottom includes one knitting code that defines transferring the stitch to the opposite needle bed, the fourth knitting course 60 from the bottom includes one knitting code that defines transferring the stitch in the knitting width direction (racking and transfer to the original needle bed), and the sixth knitting course 60 from the bottom includes three knitting codes that define forming a front stitch. The derivation unit 23B sets, for such partial design data, virtual stitches 9s over the entire width of the knitting course 60 on the lower side of the starting stitches of the partial design data (on the first course of the design sheet 6). Using the virtual stitches 9s as starting stitches, information relating to connection of stitches in the wale direction is generated in accordance with the procedure shown in Embodiment 1. Here, the derivation unit 23B determines that information relating to a virtual stitch 9s for which no knitting code is set after a predetermined number of knitting courses 60 or more is not involved in knitting based on the partial design data, and deletes the information from the connection information (see the lower figure of FIG. 7(A)). The predetermined number may be set to, for example, three or more. Of course, it is also possible to check all of the knitting courses 60, and identify virtual stitches 9s that are not involved in knitting, based on the partial design data. The display adjustment unit 24 may display the state of the upper figure of FIG. 7(A) and then display the state of the lower figure of FIG. 7(A). Alternatively, the display adjustment unit 24 may display the state of the lower figure without displaying the state of the upper figure.

In a design sheet 6 show in FIG. 7(B), the third knitting course 60 from the bottom includes one knitting code that defines transferring the stitch to the opposite needle bed, the fourth knitting course 60 from the bottom includes one knitting code that defines transferring the stitch to the knitting width direction, and the sixth knitting course 60 from the bottom includes four knitting codes that define forming a front stitch. The second upper course and onward of the design sheet 6 correspond to the partial design data. Also in this example, the derivation unit 23B sets virtual stitches 9s over the entire width of the knitting course 60 on the lower side of the starting stitches of the partial design data, and generates connection information of stitches in the wale direction. Then, as shown in the middle figure of FIG. 7(B), the derivation unit 23B deletes, from the connection information, information relating to virtual stitches 9s that are not involved in knitting, based on the partial design data. Here, the derivation unit 23B of the present example also determines that, as shown in the lower figure of FIG. 7(B), the second virtual stitch 9s from the left for which no knitting code is set until a double stitch indicated by a black point is formed is not involved in knitting, based on the partial design data, and deletes the information relating to this virtual stitch 9s from the connection information.

With the above-described processing performed by the derivation unit 23B, even if partial design data, which is a part of existing design data, is used, a connection state of stitches in the wale direction on the partial design data can be visually recognized. Accordingly, an overall picture of the partial design data in the course of the knitting process can be easily grasped, thus making it possible to easily improve the existing design data.

## Claims

1. A knitted fabric design system (100) comprising:
a display unit (4) configured to display a design sheet (6) that is grid-shaped such that a plurality of knitting courses (60), each including a plurality of knitting units (6u) lined up in a lateral direction, are lined up in a vertical direction, the knitting units (6u) corresponding to respective needles of needle beds of a flat knitting machine;
an input unit (1) with which a user can input knitting codes to the knitting units (6u) of the design sheet (6); and
a design data generating unit (21) configured to generate, based on the design sheet (6) to which the knitting codes are assigned, design data that includes information relating to positions, on the design sheet (6), of the knitting units (6u) and the knitting codes assigned to the positions,
**characterized in that** the knitted fabric design system (100) further comprises:
a data extracting unit (23A) configured to extract, based on the design data, movement information relating to a movement path corresponding to the position of a needle on which a stitch is temporarily held and an ultimate destination, being the position of a needle on which the stitch is held after the knitting operation defined by the corresponding knitting code has been executed, on the needle beds, of stitches corresponding to the knitting units (6u);
a derivation unit (23B) configured to obtain, based on the movement information, connection information relating to a connection state of stitches that are successive in a wale direction from a starting stitch to a termination stitch on the design data; and
a display adjustment unit (24) configured to cause the display unit (4) to display, based on the connection information, the connection state drawn with a line so that the connection state is superimposed on the design sheet (6).

2. The knitted fabric design system (100) according to claim 1,
wherein the display adjustment unit (24) is configured to perform display such that a starting stitch and a termination stitch are connected in the wale direction with a straight line on the design data.

3. The knitted fabric design system (100) according to claim 1,
wherein the display adjustment unit (24) is configured to display a route of movement, in a knitting width direction, of stitches that are connected in the wale direction from a starting stitch to a termination stitch on the design data.

4. The knitted fabric design system (100) according to any one of claims 1 to 3,
wherein, if the design data is partial design data for knitting a part of a knitted fabric, the derivation unit (23B) obtains the connection information on the assumption that, before a starting end of the partial design data, virtual stitches (9s) are present over a range larger than the knitting width of the partial design data, and deletes, from the connection information, a virtual stitch (9s) for which no knitting code is set after a predetermined number of knitting courses (60) or more.

## Patentansprüche

1. Gestrickentwurfssystem (100), umfassend:
eine Anzeigeeinheit (4), die konfiguriert ist zum Anzeigen eines Entwurfsblatts (6), das gitterförmig ist, sodass eine Vielzahl von Strickreihen (60), die jeweils eine Vielzahl von in einer lateralen Richtung aufgereihten Strickeinheiten (6u) enthalten, in einer vertikalen Richtung aufgereiht sind, wobei die Strickeinheiten (6u) entsprechenden Nadeln von Nadelbetten einer Flachstrickmaschine entsprechen,
eine Eingabeeinheit (1), mit der ein Benutzer Strickcodes zu den Strickeinheiten (6u) des Entwurfsblatts (6) eingeben kann, und
eine Entwurfsdaten-Erzeugungseinheit (21), die konfiguriert ist zum Erzeugen, basierend auf dem Entwurfsblatt (6), dem die Strickcodes zugewiesen sind, von Entwurfsdaten, die Informationen in Bezug auf Positionen der Strickeinheiten (6u) auf dem Entwurfsblatt (6) und die den Positionen zugewiesenen Strickcodes enthalten,
**dadurch gekennzeichnet, dass** das Gestrickentwurfssystem (100) weiterhin umfasst:
eine Datenextraktionseinheit (23A), die konfiguriert ist zum Extrahieren, basierend auf den Entwurfsdaten, von Bewegungsinformationen in Bezug auf einen Bewegungspfad in Entsprechung zu der Position einer Nadel, an welcher eine Masche vorübergehend gehalten wird, und einem endgültigen Ziel, das die Position einer Nadel, an welcher die Masche gehalten wird, nachdem die durch den entsprechenden Strickcode definierte Strickoperation ausgeführt wurde, an den Nadelbetten ist, von Maschen in Entsprechung zu den Strickeinheiten (6u),
eine Ableitungseinheit (23B), die konfiguriert ist zum Erhalten, basierend auf den Bewegungsinformationen, von Verbindungsinformationen in Bezug auf einen Verbindungszustand von Maschen, die in einer Maschenstäbchenrichtung von einer Anfangsmasche zu einer Endmasche auf den Entwurfsdaten aufeinander folgen, und
eine Anzeigeanpassungseinheit (24), die konfiguriert ist zum Veranlassen der Anzeigeeinheit (4) zum Anzeigen, basierend auf den Verbindungsinformationen, des mit einer Linie gezeichneten Verbindungszustands, sodass der Verbindungszustand auf das Entwurfsblatt (6) überlagert wird.

2. Gestrickentwurfssystem (100) nach Anspruch 1,
wobei die Anzeigeanpassungseinheit (24) konfiguriert ist zum Durchführen einer Anzeige derart, dass eine Anfangsmasche und eine Endmasche in der Maschenstäbchenrichtung durch eine gerade Linie auf den Entwurfsdaten verbunden sind.

3. Gestrickentwurfssystem (100) nach Anspruch 1,
wobei die Anzeigeanpassungseinheit (24) konfiguriert ist zum Anzeigen einer Bewegungsroute, in einer Strickbreitenrichtung, von Maschen, die in der Maschenstäbchenrichtung von einer Anfangsmasche zu einer Endmasche auf den Entwurfsdaten verbunden sind.

4. Gestrickentwurfssystem (100) nach einem der Ansprüche 1 bis 3,
wobei, wenn die Entwurfsdaten Teilentwurfsdaten für das Stricken eines Teils eines Gestricks sind, die Ableitungseinheit (23B) die Verbindungsinformationen unter der Annahme, dass vor einem Anfangsende der Teilentwurfsdaten virtuelle Maschen (9s) über einen Bereich, der größer als die Strickbreite der Teilentwurfsdaten ist, hinweg vorhanden sind, erhält und aus den Verbindungsinformationen eine virtuelle Masche (9s), für die kein Strickcode gesetzt ist, nach einer vorbestimmten Anzahl von Strickreihen (60) oder mehr löscht.

## Revendications

1. Système de conception de tissu tricoté (100) comprenant :
une unité d'affichage (4) configurée pour afficher une feuille de conception (6) qui est en forme de grille de sorte qu'une pluralité de trajets de tricot (60), comportant chacune une pluralité d'unités de tricot (6u) alignées dans une direction latérale, sont alignées vers le haut dans une direction verticale, les unités de tricotage (6u) correspondant à des aiguilles respectives de lits d'aiguilles d'une machine à tricoter à plat ;
une unité d'entrée (1) avec laquelle un utilisateur peut entrer des codes de tricotage dans les unités de tricotage (6u) de la feuille de conception (6) ; et
une unité de génération de données de conception (21) configurée pour générer, sur la base de la feuille de conception (6) à laquelle les codes de tricotage sont attribués, des données de conception qui comportent des informations relatives à des positions, sur la feuille de conception (6), des unités de tricotage (6u) et les codes de tricot attribués aux positions,
**caractérisé en ce que** le système de conception de tissu tricoté (100) comprend en outre :
une unité d'extraction de données (23A) configurée pour extraire, sur la base des données de conception, des informations de mouvement relatives à un trajet de mouvement correspondant à la position d'une aiguille au niveau de laquelle une maille est maintenue temporairement et une destination finale, qui est la position d'une aiguille sur laquelle la maille est maintenue après l'exécution de l'opération de tricotage définie par le code de tricotage correspondant, sur les lits d'aiguilles, de mailles correspondant aux unités de tricotage (6u) ;
une unité de dérivation (23B) configurée pour obtenir, sur la base des informations de mouvement, des informations de connexion relatives à un état de connexion de mailles qui se suivent dans une direction de colonne à partir d'une maille de départ jusqu'à une maille de fin sur les données de conception ; et
une unité de réglage d'affichage (24) configurée pour amener l'unité d'affichage (4) à afficher, sur la base des informations de connexion, l'état de connexion dessiné avec une ligne de sorte que l'état de connexion soit superposé sur la feuille de conception (6).

2. Système de conception de tissu tricoté (100) selon la revendication 1,
dans lequel l'unité de réglage d'affichage (24) est configurée pour effectuer un affichage de sorte qu'une maille de départ et une maille de fin soient connectées dans la direction de colonne par une ligne droite sur les données de conception.

3. Système de conception de tissu tricoté (100) selon la revendication 1,
dans lequel l'unité de réglage d'affichage (24) est configurée pour afficher un itinéraire de mouvement, dans une direction de largeur de tricotage, de mailles qui sont connectées dans la direction de colonne à partir d'une maille de départ jusqu'à une maille de fin sur les données de conception.

4. Système de conception de tissu tricoté (100) selon l'une quelconque des revendications 1 à 3,
dans lequel, si les données de conception sont des données de conception partielles pour tricoter une partie d'un tissu tricoté, l'unité de dérivation (23B) obtient les informations de connexion sur l'hypothèse que, avant une fin de départ des données de conception partielles, des mailles virtuelles (9s) sont présentes sur une plage plus grande que la largeur de tricotage des données de conception partielles, et supprime, des informations de connexion, une maille virtuelle (9s) pour laquelle aucun code de tricotage n'est établi après un nombre prédéterminé de trajets de tricotage (60) ou plus.
